# EUROPÄISCHE PATENTSCHRIFT

(11) **EP 3 986 142 B1**
(45) Veröffentlichungstag und Bekanntmachung des Hinweises auf die Patenterteilung: **25.01.2023**
(21) Anmeldenummer: 20739327.3
(22) Anmeldetag: 08.07.2020
(51) Int. Cl.: A22C 21/00

(54) **VORRICHTUNG ZUM MESSEN DER SCHULTERGELENKPOSITION KONTINUIERLICH GEFÖRDERTER GEFLÜGELKÖRPER, ANORDNUNG ZUM FILETIEREN VON GEFLÜGELKÖRPERN SOWIE ENTSPRECHENDE VERFAHREN**
DEVICE FOR MEASURING THE SHOULDER JOINT POSITION OF CONTINUOUSLY CONVEYED POULTRY CARCASSES, ARRANGEMENT FOR FILLETING POULTRY CARCASSES AND CORRESPONDING METHODS
DISPOSITIF POUR MESURER LA POSITION DE L'ARTICULATION D'ÉPAULE DE CORPS DE VOLAILLE TRANSPORTÉS EN CONTINU, AGENCEMENT DE DÉCOUPE DE FILETS DE CORPS DE VOLAILLE ET PROCÉDÉS CORRESPONDANTS

(30) Priorität: 19.07.2019 DE 102019119665
(43) Veröffentlichungstag der Anmeldung: 27.04.2022
(73) Patentinhaber: Nordischer Maschinenbau Rud. Baader GmbH + Co. KG, 23560 Lübeck (DE)
(72) Erfinder: FISCHER, Valentin, 23560 Lübeck (DE); RIGGERT, Lasse, 23560 Lübeck (DE); SASS, Norbert, 23560 Lübeck (DE)
(74) Vertreter: Stork Bamberger Patentanwälte PartmbB
(86) Internationale Anmeldenummer: PCT/EP2020/069221
(87) Internationale Veröffentlichungsnummer: WO 2021/013545

(56) Entgegenhaltungen:
- EP-A1- 2 599 387
- DE-A1- 19 848 498
- JP-A- 2011 177 096
- JP-B2- 6 146 809

## Beschreibung

Die vorliegende Erfindung betrifft eine Vorrichtung zum Messen der Schultergelenkposition kontinuierlich geförderter Geflügelkörper, umfassend eine Förderstrecke mit einer mehrere Aufnahmeelemente zur Halterung der Geflügelkörper aufweisenden Fördereinrichtung, die eingerichtet ist, die Geflügelkörper in eine Förderrichtung entlang eines Förderwegs kontinuierlich zu fördern, wobei die Fördereinrichtung ausgebildet ist, die Geflügelkörper zumindest in einem Messabschnitt der Förderstrecke mit den Schultergelenken in der Förderrichtung voraus zu fördern, und eine entlang der Förderstrecke in dem Messabschnitt angeordnete Messstation mit zwei Messelementen, die eingerichtet sind beim Passieren eines der Geflügelkörper jeweils mit den Schultergelenken des Geflügelkörpers in mechanischen Kontakt zu gelangen, und wobei die Messelemente jeweils um eine Schwenkachse derart schwenkbar angeordnet sind, dass diese sich in einer Ruheposition zumindest im Wesentlichen quer zu der Förderrichtung in den Förderweg hineinragend erstrecken und beim Kontakt mit den Schultergelenken des Geflügelkörpers in einer Arbeitsposition in Förderrichtung schwenkbeweglich auslenkbar eingerichtet sind, wobei die Messstation Detektionsmittel zur Erkennung der Arbeitspositionen der Messelemente aufweist.

Des Weiteren betrifft die Erfindung eine Anordnung zum Filetieren von Geflügelkörpern.

Des Weiteren betrifft die Erfindung ein Verfahren zum Messen der Schultergelenkposition kontinuierlich geförderter Geflügelkörper, umfassend kontinuierliches Fördern der Geflügelkörper entlang eines Förderweges einer Förderstrecke mittels mehrerer zur Halterung der Geflügelkörper eingerichteter Aufnahmeelemente einer Fördereinrichtung, wobei die Geflügelkörper zumindest in einem Messabschnitt der Förderstrecke mit den Schultergelenken in der Förderrichtung voraus gefördert werden, und jeweils Abtasten der Schultergelenke der Geflügelkörper durch mechanisches in Kontakt bringen der Schultergelenke mit zwei Messelementen einer Messstation beim Passieren eines der Geflügelkörper, die entlang der Förderstrecke in dem Messabschnitt angeordnet sind, und wobei die Messelemente aus einer Ruheposition, in der sich die Messelemente zumindest im Wesentlichen quer zu der Förderrichtung in den Förderweg hineinragend erstrecken, beim Kontakt mit den Schultergelenken des Geflügelkörpers in eine Arbeitsposition in Förderrichtung verschwenkt werden, und dass die Arbeitspositionen der Messelemente mittels Detektionsmittel der Messstation erkannt werden.

Die vorliegende Erfindung betrifft des Weiteren ein Verfahren zum Filetieren von Geflügelkörpern.

Derartige Vorrichtungen, Anordnungen und Verfahren kommen insbesondere beim automatisierten Filetieren von Geflügelkörpern zum Einsatz. Eine solche Vorrichtung sowie ein Verfahren ist beispielsweise aus dem Dokument DE 198 48 498 A1 bekannt. Mittels wenigstens einer Messvorrichtung werden die individuellen Körpermaße der Geflügelkörper erfasst und auf Basis dieser Messungen mittels einer Steuerungseinheit wenigstens eine Schabevorrichtung gesteuert. Zur Erfassung der Geflügelkörpergeometrie kommen mehrere Messelemente zum Einsatz. Diese kommen mit dem Geflügelkörper mechanisch in Kontakt und werden entsprechend der Geflügelkörpergeometrie angesteuert.

Nachteilig ist, dass die Messelemente nach erfolgter Auslenkung sich zunächst in eine Ruhelage zurückbewegen müssen, bevor der Messvorgang an einem nachfolgenden Geflügelkörper durchgeführt werde kann. Hieraus resultieren Totzeiten, innerhalb derer kein Messvorgang möglich ist. Diese Totzeiten bestimmen maßgeblich die maximale Durchsatzrate pro Zeiteinheit verarbeitbarer Geflügelkörper. Die bekannten Messvorrichtungen und Messverfahren halten damit den heutigen Anforderungen an eine möglichst hohe Durchsatzrate nicht mehr stand.

Aus dem EP 2 599 387 A1 sind eine Vorrichtung und ein Verfahren bekannt zum Messen der Schultergelenkposition kontinuierlich geförderter Geflügelkörper.

Es ist daher Aufgabe der vorliegenden Erfindung, eine Vorrichtung vorzuschlagen, die eine zuverlässige Messung der Schultergelenkposition an Geflügelkörpern auch bei hohen Durchsatzraten erlaubt.

Die Aufgabe wird durch eine Vorrichtung mit den eingangsgenannten Merkmalen dadurch gelöst, dass die Messelemente mechanische Dämpfungselemente umfassen, die eingerichtet sind, die Messelemente jeweils in der Ruheposition mechanisch zu bedämpfen.

Die mechanischen Dämpfungselemente bewirken, dass die Messelemente nach erfolgter Auslenkung durch eine Geflügelkarkasse möglichst rasch in der Ruheposition zum Stillstand kommen. Durch die Dämpfungselemente wird einerseits bewirkt, dass die Messelemente beim Zurückschwenken in die Ruheposition keine oder nur sehr kurz andauernde Eigenschwingung ausführen. Hierdurch werden etwaige Totzeiten, innerhalb derer keine verlässliche Messung durchgeführt werden kann, auf ein Minimum reduziert. Dies wirkt sich positiv auf die maximale Durchsatzleistung an Geflügelkörpern pro Zeit aus, so dass die Gesamtdurchsatzleistung gegenüber den aus dem Stand der Technik bekannten Vorrichtungen signifikant gesteigert werden kann.

Eine zweckmäßige Ausgestaltung der Erfindung ist dadurch gekennzeichnet, dass an den Messelementen Rückstellmittel angeordnet sind, die eingerichtet sind, auf die Messelemente ein Rückstellmoment in Richtung der Ruheposition auszuüben.

Die Rückstellmittel bieten den Vorteil, dass die Messelemente möglichst schnell nach einem Messvorgang zurück in die Ruheposition bewegt werden. Zudem sind die Rückstellmittel ausgebildet, die Messelemente an die Geflügelkörperoberfläche zu drücken, so dass diese in Daueranlage mit dem Geflügelkörper während eines Messvorgangs kommen. Auf diese Weise wird sichergestellt, dass die Messelemente exakt der Geflügelkörpergeometrie folgen und auf diese Weise eine präzise Messung der Schultergelenkposition möglich ist.

Eine bevorzugte Weiterbildung der Erfindung zeichnet sich dadurch aus, dass die Detektionsmittel als Schaltelemente ausgebildet sind, mittels derer die Ruheposition und/oder die Arbeitsposition erfassbar sind/ist.

Die Ausführung der Detektionsmittel als Schaltelemente bietet mehrere Vorteile. Zum einen sind derartige Schaltelemente wartungsarm und in der rauen Umgebung, in der die Detektionsmittel Verunreinigungen und Feuchtigkeit ausgesetzt sind, äußerst robust. Zum anderen sind als Schaltelemente ausgebildete Detektionsmittel kostengünstig und steuerungsseitig mit vergleichsweise geringem Aufwand auswertbar.

Gemäß einer weiteren bevorzugten Ausbildung der Erfindung sind die Schaltelemente als induktive Näherungssensoren ausgebildet.

Die Ausführung der Schaltelemente als induktive Näherungssensoren bietet den Vorteil, dass diese nahezu verschleißfrei und vollständig unempfindlich gegenüber Verschmutzung und von außen einwirkender Feuchtigkeit sind. Mittels der induktiven Näherungssensoren erfolgt die Erkennung der Ruhe- bzw. Arbeitsposition des jeweiligen Messelements zudem berührungslos.

Eine weitere zweckmäßige Ausgestaltung der Erfindung ist dadurch gekennzeichnet, dass die Dämpfungselemente jeweils mindestens ein Dauermagnetpaar mit einander zugewandten Polflächen gegensätzlicher magnetischer Polarität umfassen.

Die Ausbildung der Dämpfungselemente als Dauermagnetpaar bietet den Vorteil, dass vergleichsweise hohe Haltekräfte durch die Magneten bewirkt werden, die die Messelemente in der Ruheposition halten. Wird das Messelement aus der Ruheposition in die Arbeitsposition ausgelenkt, wirkt sich die Anziehungskraft des Dauermagnetpaares nur noch in vernachlässigbarer Größenordnung auf das Messelement aus, da die Haltekräfte zwischen den Magneten mit steigendem Abstand voneinander stark abnehmen. Anders ausgedrückt wirkt das Dämpfungselement bei einer Auslenkung des Messelements in der Nähe der Arbeitsposition sich praktisch gar nicht auf die erforderliche Auslenkkraft aus. Diese wird allein durch die Art der Rückstellmittel und der Grö-βe des damit erzeugten Rückstellmoments bestimmt. Erst wenn sich das Messelement in der Nähe der Ruheposition befindet, nehmen die Haltekräfte des Dauermagnetpaares zu, so dass die gewünschte mechanische Dämpfung der Bewegung des jeweiligen Messelements in der Ruheposition erzielt wird.

Eine bevorzugte Weiterbildung der Erfindung zeichnet sich dadurch aus, dass wenigstens ein Dauermagnet eines der Dauermagnetpaare jeweils an dem Messelement zusammen mit diesem schwenkbeweglich angeordnet und wenigstens ein Dauermagnet gegensätzlicher Polarität ortsfest angeordnet ist.

Der Einsatz der genannten Dauermagnete bietet den Vorteil, dass die Dämpfungselemente verschleiß- und wartungsfrei sind.

Gemäß einer weiteren bevorzugten Ausbildung der Erfindung sind die freien Enden der Messelemente in der Ruheposition gegenüber einer Senkrechten zu der Förderrichtung um einen Vorhaltewinkel α entgegen der Förderrichtung ausgerichtet angeordnet.

Durch die Ausrichtung der Messelemente um den genannten Vorhaltewinkel α entgegen der Förderrichtung kann die Empfindlichkeit der Messelemente variabel eingestellt werden. Je größer der Vorhaltewinkel ist, desto größer ist der erforderliche Auslenkweg, bevor die Messelemente die Ruheposition verlassen und in die Arbeitsposition verschwenkt werden. Anders ausgedrückt bestimmt der Vorhaltewinkel α die Größe eines Totweges, den die Schultergelenke nach erstmaligem mechanischem Kontakt mit den Messelementen in der Förderrichtung zurücklegen müssen, bevor die Messelemente die Ruheposition verlassen haben. So ist es auf besonders einfache Weise möglich, die Robustheit des Messvorgangs gegenüber Störung, die beispielsweise durch ein mechanisches Prellen der Messelemente verursacht werden, bzw. die gewünschte Messempfindlichkeit entsprechend dem jeweiligen Bedarf einzustellen.

Eine weitere zweckmäßige Ausgestaltung der Erfindung ist dadurch gekennzeichnet, dass die Vorrichtung weiter eine dem Messabschnitt bezüglich der Förderrichtung vorgeordnete Detektionseinrichtung umfasst, die ausgebildet ist, das Passieren eines Referenzpunktes der Aufnahmeelemente zu erfassen, wobei der Referenzpunkt der Aufnahmeelemente so gewählt ist, dass die Schultergelenke des Geflügelkörpers in der Förderrichtung gegenüber dem Referenzpunkt voreilen, sowie eine mit der Detektionseinrichtung und den Detektionsmitteln verbundene Steuereinrichtung, die ausgebildet ist, jeweils ein Intervall zwischen dem Passierens des Referenzpunktes und dem Erkennen der Arbeitspositionen der Messelemente zu bestimmen und auf Basis der Grö-βe dieses Intervalls sowie der Fördergeschwindigkeit der Fördereinrichtung die Schultergelenkposition zu bestimmen.

So ist es auf besonders einfache Weise möglich, die Schultergelenkposition exakt zu bestimmen. Dies wirkt sich insbesondere vorteilhaft bei hoher Durchsatzleistung aus, da die Auswertung der genannten Intervallgröße keinen hohen Rechenaufwand erfordert, so dass auch bei hohen Durchsatzleistungen die Schultergelenkposition problemlos in Echtzeit bestimmt werden kann.

Eine bevorzugte Weiterbildung der Erfindung zeichnet sich dadurch aus, dass die Steuereinrichtung ausgebildet ist, das Intervall mittels eines an der Fördereinrichtung zur Erfassung der Förderposition angeordneten Drehgebers förderstreckenbezogen oder zeitbezogen zu bestimmen.

Die Bestimmung der Förderposition mittels des Drehgebers und die förderstreckenbezogene Bestimmung des Intervalls bieten den Vorteil, dass die tatsächlich zurückgelegte Förderstrecke jederzeit bekannt und als Ausgangsgröße herangezogen wird. So stören beispielsweise geringfügige Schwankungen der Fördergeschwindigkeit die Bestimmung der Schultergelenkposition nicht, da die gesamte Auswertung nicht zeitsondern streckenbezogen abläuft. Bei entsprechend konstanter Fördergeschwindigkeit ist es alternativ möglich, dass Intervall zeitbezogen zu bestimmen. In diesem Fall werden die jeweiligen Zeitpunkte des Passierens des Referenzpunktes sowie des Erkennens der jeweiligen Arbeitsposition der Messelemente erfasst und das Intervall repräsentiert die Differenz zwischen dem ermittelten Zeitpunkt.

Die Aufgabe wird durch die eingangs genannte Anordnung zum Filetieren von Geflügelkörpern gelöst, wobei diese die zuvor beschriebene erfindungsgemäße Vorrichtung zum Messen der Schultergelenkposition der kontinuierlich geförderten Geflügelkörper sowie mindestens eine in der Förderrichtung nachgeordnete Filetierstation umfasst, wobei die Bearbeitungswerkzeuge der Filetierstation eingerichtet sind, auf Basis der mittels der Vorrichtung erkannten Arbeitspositionen der Messelemente gesteuert zu werden.

Auf diese Weise wird eine präzise Steuerung der Bearbeitungswerkzeuge der Filetierstation auch bei hohen Durchsatzraten erreicht.

Des Weiteren wird die Aufgabe durch eine Anordnung mit den eingangsgenannten Merkmalen dadurch gelöst, dass die Bearbeitungswerkzeuge eingerichtet sind, auf Basis derjenigen erkannten Arbeitsposition der Messelemente gesteuert zu werden, die jeweils zuletzt mit dem Geflügelkörper in mechanischen Kontakt gelangt sind.

Durch die Auswertung des jeweils zuletzt mit dem Geflügelkörper in mechanischen Kontakt gelangtem Messelement in seiner Arbeitsposition wird jeweils das Schultergelenk eines der Geflügelkörper gemessen, das jeweils die geringere Ausdehnung aufweist. Sofern die Geometrie der jeweiligen Körperhälften des Geflügelkörpers nicht deckungsgleich sondern unterschiedlich groß ist, dient als Ausgangspunkt für die Schultergelenksmessung jeweils die kleinere Geflügelkörperseite. Hierdurch wird sichergestellt, dass die Bearbeitungswerkzeuge der nachgeordneten Filetierstation stets rechtzeitig an dem Geflügelkörper zur Bearbeitung herangeführt werden, so dass auch bei Geflügelkörpern mit nicht seitengleicher Geometrie gleichwohl eine optimale Bearbeitung stattfindet.

Gemäß einer weiteren bevorzugten Ausbildung der Erfindung umfassen die Bearbeitungswerkzeuge jeweils Werkzeuge zur rechts- und linksseitigen Bearbeitung des Geflügelkörpers und sind eingerichtet, jeweils separat von den Messelementen gesteuert zu werden.

Die separate Steuerung der Werkzeuge zur rechts- und linksseitigen Bearbeitung bietet den Vorteil, dass auch bei Asymmetrien der beiden Körperhälften jede Seite individuell und damit optimal bearbeitet wird.

Des Weiteren wird die Aufgabe durch ein Verfahren mit den eingangsgenannten Merkmalen durch mechanisches Dämpfen der Schwenkbewegung der Messelemente in der Ruheposition mittels mechanischer Dämpfungselemente gelöst.

Die mit dem erfindungsgemäßen Verfahren verbundenen Vorteile sind im Wesentlichen bereits im Zusammenhang mit der erfindungsgemäßen Vorrichtung im Detail beschrieben worden. Zur Vermeidung von Wiederholungen verweisen wir daher im Zusammenhang mit dem erfindungsgemäßen Verfahren sowie dessen weiteren Ausführungsformen auf die zuvor gemachten Ausführungen hinsichtlich der bestehenden Vorteile der erfindungsgemäßen Vorrichtung.

Eine bevorzugte Weiterbildung der Erfindung zeichnet sich durch Ausüben eines Rückstellmoments in Richtung der Ruheposition mittels an den Messelementen angeordneter Rückstellmittel aus.

Eine weitere zweckmäßige Ausgestaltung der Erfindung ist durch Erfassen der Ruheposition und/oder der Arbeitsposition mittels der als Schaltelemente ausgebildeten Detektionsmittel gekennzeichnet.

Gemäß einer weiteren bevorzugten Ausbildung der Erfindung ist das Verfahren durch berührungsloses Erfassen der Ruheposition und/oder der Arbeitsposition durch die als induktive Näherungssensoren ausgebildeten Schaltmittel gekennzeichnet.

Gemäß einer weiteren bevorzugten Ausbildung der Erfindung erfolgt die Dämpfung magnetisch.

Eine bevorzugte Weiterbildung der Erfindung zeichnet sich dadurch aus, dass die freien Enden der Messelemente in der Ruheposition gegenüber einer Senkrechten zu der Förderrichtung um einen Vorhaltewinkel α entgegen der Förderrichtung ausgerichtet sind.

Gemäß einer weiteren bevorzugten Ausbildung der Erfindung ist das Verfahren weiter durch Erfassen eines Zeitpunktes des Passierens eines Referenzpunktes der Aufnahmeelemente mittels einer dem Messabschnitt bezüglich der Förderrichtung vorgeordneten Detektionseinrichtung, wobei der Referenzpunkt der Aufnahmeelemente so gewählt ist, dass die Schultergelenke des Geflügelkörpers in der Förderrichtung gegenüber dem Referenzpunkt voreilen, und durch Bestimmen jeweils eines Zeitintervall zwischen dem Zeitpunkt des Passierens des Referenzpunktes und dem Zeitpunkt der Erkennung der Arbeitspositionen der Messelemente mittels der Detektionsmittel und durch Bestimmen der Schultergelenkposition auf Basis der Größe des Zeitintervalls sowie der Fördergeschwindigkeit der Fördereinrichtung mittels einer Steuereinrichtung gekennzeichnet.

Die Erfindung wird auch durch das eingangs genannte Verfahren zum Filetieren von Geflügelkörpern gelöst, wobei das Verfahren das Bestimmen der Schultergelenkposition der kontinuierlich geförderten Geflügelkörper mittels eines vorgenannten Verfahrens sowie das Steuern von Bearbeitungswerkzeugen einer in der Förderrichtung der Messstation nachgeordneten mindestens einen Filetierstation auf Basis der mittels der Detektionsmittel erkannten Arbeitspositionen der Messelemente umfasst.

Hinsichtlich der Vorteile dieses erfindungsgemäßen Verfahrens verweisen wir auf die im Zusammenhang mit der erfindungsgemäßen Anordnung genannten Vorzüge, die in analoger Weise gelten.

Weitere bevorzugte und/oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert.

In der Zeichnung zeigt:
- Fig. 1: eine perspektivische Ansicht der erfindungsgemäßen Vorrichtung, bei der sich die Messelemente jeweils in einer Ruheposition befinden,
- Fig. 2: eine Draufsicht der in Fig. 1 gezeigten Vorrichtung,
- Fig. 3: eine perspektivische Ansicht der in Fig. 1 und Fig. 2 gezeigten Vorrichtung mit Blick in Richtung entgegen der Förderrichtung,
- Fig. 4: eine perspektivische Ansicht der erfindungsgemäßen Vorrichtung, bei der die Messelemente jeweils in einer Arbeitsposition sind und
- Fig. 5: eine Draufsicht der in Fig. 4 gezeigten Vorrichtung.

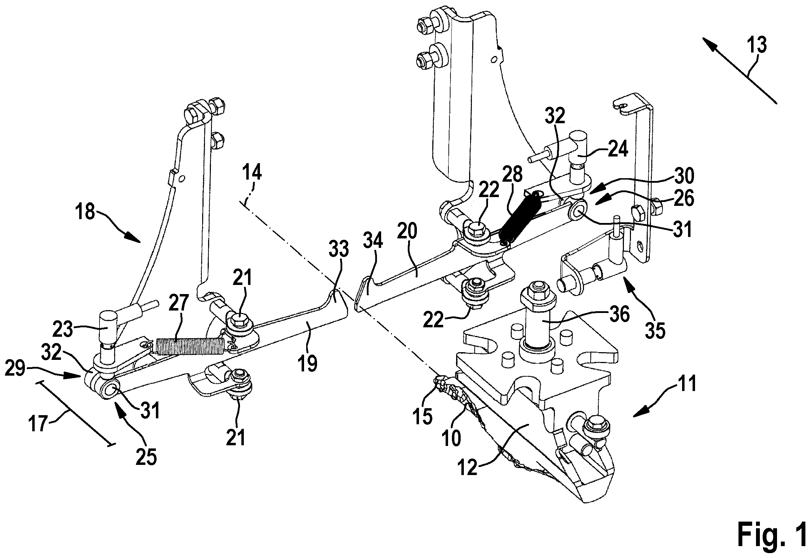

Fig. 1 zeigt eine perspektivische Ansicht der erfindungsgemäßen Vorrichtung, die eingerichtet ist, die Schultergelenkposition kontinuierlich geförderter Geflügelkörper 10 zu messen. In der Zeichnung ist der Geflügelkörper 10 nur schematisch gezeigt, nämlich in Form einer Brustkappe, wobei aus Gründen der Übersichtlichkeit die Brustkappe ohne anhaftende Fleischbestandteile dargestellt ist. Die erfindungsgemäße Vorrichtung umfasst eine Fördereinrichtung, von der aus Gründen der besseren Übersichtlichkeit in den Figuren nur ausgewählte Teile dargestellt sind. Die Fördereinrichtung weist mehrere Aufnahmeelemente 11 zur Halterung der Geflügelkörper 10 auf. Wie in Fig. 1 gezeigt, ist der Geflügelkörper 10 vorzugsweise auf einem Sattelelement 12 eines der Aufnahmeelemente 11 angeordnet. Die Fördereinrichtung ist weiter ausgebildet, die Geflügelkörper 10 in eine Förderrichtung 13 entlang eines - in der Fig. 1 durch eine gestrichelte Linie angedeuteten - Förderwegs 14 zu fördern. Die Fördereinrichtung bildet so eine - in der Zeichnung nicht näher bezeichnete - Förderstrecke. Die Fördereinrichtung ist, wie in der Zeichnung gezeigt, vorzugsweise als Hängefördereinrichtung ausgebildet. Weiter ist die Fördereinrichtung ausgebildet, die Geflügelkörper 10 jeweils mit den Schultergelenken 15, 16 voraus zu fördern. Mit anderen Worten ist der Geflügelkörper 10 auf den Aufnahmeelementen 11 bzw. dem Sattelelement 12 derart ausgerichtet, dass dieser schultergelenkseitig voraus gefördert wird.

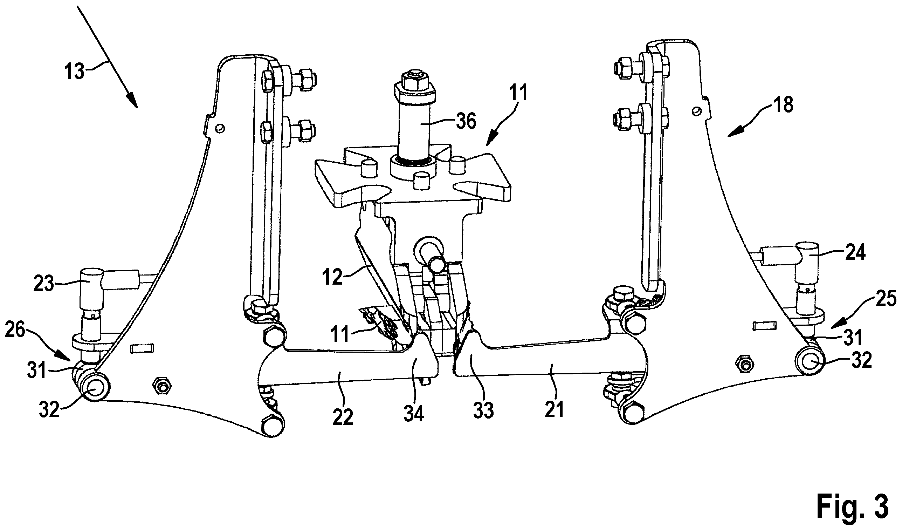

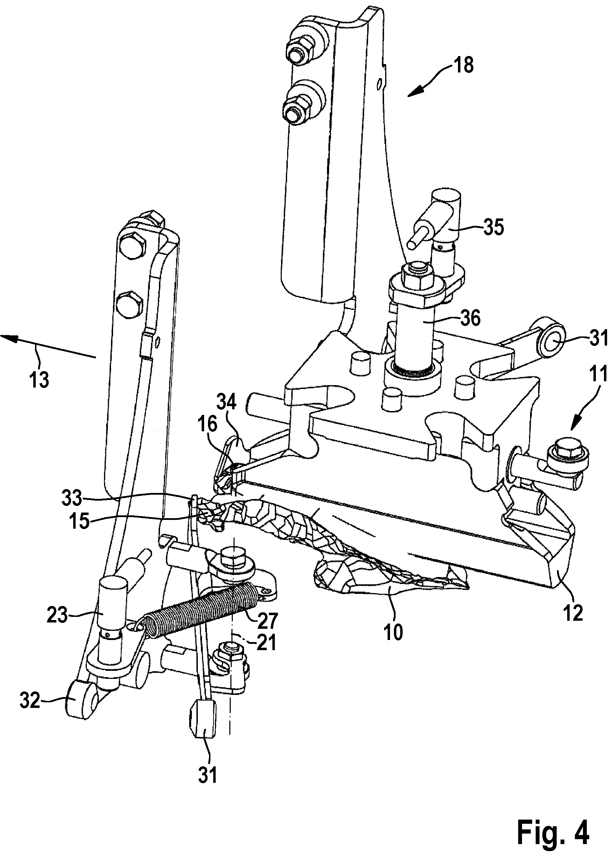

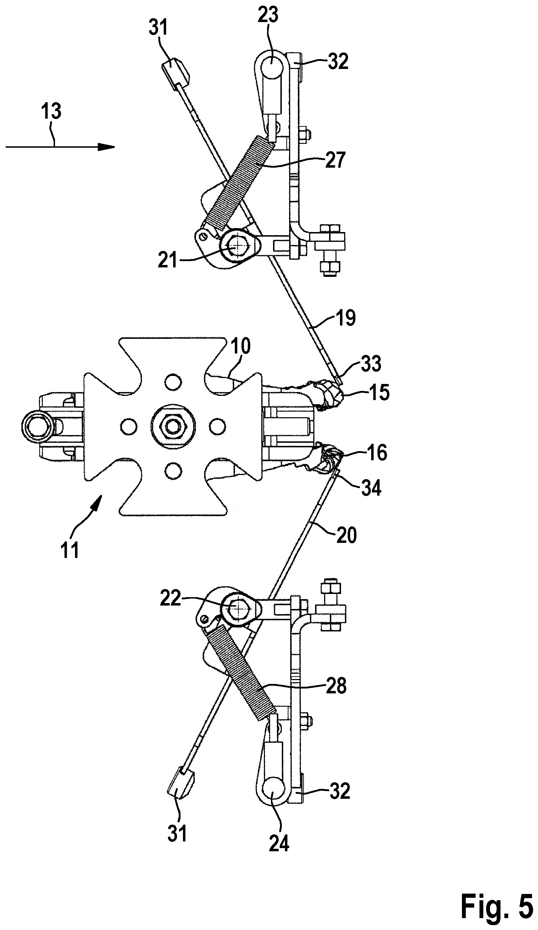

Wie in Fig. 1 gezeigt, ist entlang der Förderstrecke in einem Messabschnitt 17 der Förderstrecke eine Messstation 18 angeordnet. Die Messstation 18 weist jeweils zwei Messelemente 19, 20 auf, die eingerichtet sind, beim Passieren eines der Geflügelkörper 10 jeweils mit den Schultergelenken 15, 16 des Geflügelkörpers 10 in mechanischen Kontakt zu gelangen. Ein solches in Kontaktkommen der Schultergelenke 15, 16 mit den Messelementen 19, 20 ist beispielsweise in Fig. 4 und 5 gezeigt. Die Fig. 1, 2 und 3 zeigen dagegen einen Zustand, bei dem sich das Aufnahmeelement 11 mit dem Geflügelkörper 10 erst im Zulauf zu der Messstation 18 befindet.

Fig. 1 zeigt weiter, dass die Messelemente 19, 20 jeweils um eine Schwenkachse 21, 22 schwenkbar angeordnet sind. Die perspektivische Ansicht gemäß Fig. 1 zeigt die Messelemente 19, 20 jeweils in einer Ruheposition, bei der diese quer zu der Förderrichtung 13 bzw. nur geringfügig von der Senkrechten zur Förderrichtung 13 abweichend sich in den Förderweg 14 hineinragend erstrecken.

Wie in Fig. 4 gezeigt, sind die Messelemente 19, 20 jeweils derart um die Schwenkachsen 21, 22 angeordnet, dass beim Kontakt mit den Schultergelenken 15, 16 des Geflügelkörpers 10 diese aus der Ruheposition in eine Arbeitsposition in Förderrichtung 13 ausgelenkt werden. Die Auslenkung in die Arbeitsposition wird jeweils mittels Detektionsmitteln 23, 24 erkannt. Anstelle der Erkennung des Verschwenkens der Messelemente 19, 20 in die Arbeitsposition, ist es auch möglich, ein Verlassen der Ruheposition mittels der Detektionsmittel 23, 24 zu erkennen.

Die Messelemente 19, 20 umfassen zudem mechanische Dämpfungselemente 25, 26, die eingerichtet sind, die Messelemente 19, 20 jeweils in der Ruheposition mechanisch zu dämpfen. Anders ausgedrückt erfüllen die Dämpfungselemente 25, 26 die Funktion, die aus der Arbeitsposition in die Ruheposition zurückschwenkenden Messelemente 19, 20 an einem Ausschwingvorgang zu hindern bzw. diesen stark abzudämpfen. So wird erreicht, dass die Messelemente 19, 20 nach erfolgter Auslenkung in die Arbeitsposition möglichst rasch zur Ruhe kommen und auf diese Weise innerhalb kürzester Zeit für eine erneute Messung der Schultergelenkposition des jeweils nachfolgenden Geflügelkörpers 10 bereitstehen.

Vorteilhafterweise sind an den Messelementen 19, 20 jeweils Rückstellmittel 27, 28 angeordnet, die eingerichtet sind, auf die Messelemente 19, 20 ein Rückstellmoment in Richtung der Ruheposition auszuüben. Wie in der Zeichnung gezeigt, kommen als Rückstellmittel 27, 28 vorzugsweise Zugfedern zum Einsatz. Diese sind wie in der Zeichnung gezeigt, derart angeordnet, dass diese ein Rückstellmoment auf das jeweilige Messelement 19, 20 ausüben, sobald dieses aus seiner Ruhelage ausgelenkt wird. Alternativ ist es möglich, Druckfedern einzusetzen, die dementsprechend bei einer Auslenkung des jeweiligen Messelements 19, 20 aus der Ruhestellung heraus druckbeaufschlagt werden, und auf diese Weise ein entsprechendes Rückstellmoment in Richtung der Ruheposition auf das jeweilige der Messelemente 19, 20 ausüben.

Gemäß einer weiteren alternativen Ausführungsform können die Rückstellmittel 27, 28 als pneumatische Zylinder oder durch eine Dauermagnetenanordnung gebildet werden.

Vorzugsweise sind die Detektionsmittel 23, 24 als Schaltelemente ausgebildet, beispielsweise als elektromechanischer Schaltkontakt. Die Schaltelemente können jedoch auch optische Abtastmittel, beispielsweise eine Lichtschrankenanordnung umfassen. Mittels der Detektionsmittel 23, 24 wird entweder die Ruheposition der Messelemente 19, 20 und/oder die Arbeitsposition dieser erfasst. Besonders bevorzugt sind die Schaltelemente - wie in der Zeichnung gezeigt - als induktive Näherungssensoren ausgebildet.

Vorteilhafterweise sind die Messelemente 19, 20 - wie in der Zeichnung gezeigt - als zweiarmiger Hebel ausgebildet, wobei einer der Hebelarme eine Art Messfahne bildet, die eingerichtet ist, mit den Schultergelenkten 15, 16 der Geflügelkörper 10 in Kontakt zu kommen, während der jeweils andere Hebelarm die eingangsgenannten Dämpfungselemente 25, 26 sowie die Detektionsmittel 23, 24 umfasst. Alternativ ist es möglich, die Messelemente 19, 20 auch als einarmigen Hebel auszubilden. In diesem Fall sind sämtliche der vorgenannten Komponenten an jeweils diesem einen Hebelarm eines der Messelemente 19, 20 angeordnet.

Vorteilhafterweise umfassen die Dämpfungselemente 25, 26 jeweils mindestens ein Dauermagnetpaar 29, 30, also jeweils mindestens zwei Magnete miteinander zugewandten Polflächen gegensätzlicher magnetischer Polarität. Vorzugsweise ist wenigstens ein Dauermagnet 31 eines der Dauermagnetpaare 29, 30 jeweils an dem Messelement 19 zusammen mit diesem schwenkbeweglich angeordnet. Ein weiterer Dauermagnet 32 ist ortsfest angeordnet, so dass sich die Dauermagnete 31, 32 jeweils anziehen.

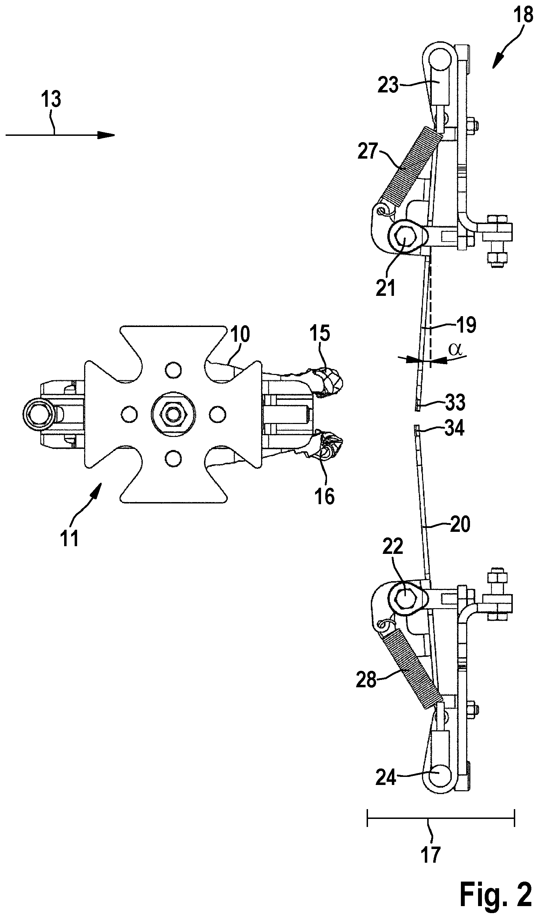

Vorzugsweise sind die freien Enden 33, 34 der Messelemente 19, 20, wie in der Fig. 2 gezeigt, in der Ruheposition gegenüber einer Senkrechten zu der Förderrichtung 13 um ein Vorhaltewinkel α entgegen der Förderrichtung 13 ausgerichtet angeordnet.

Weiter bevorzugt ist der Vorhaltewinkel α einstellbar. Gemäß einer weiteren vorteilhaften Ausbildung der Erfindung umfasst die erfindungsgemäße Vorrichtung eine Detektionseinrichtung 35. Diese ist ausgebildet, das Passieren eines Referenzpunktes der Aufnahmeelemente 11 zu erfassen. Der Referenzpunkt der Aufnahmeelemente 11 ist hierbei so gewählt, dass die Schultergelenkte 15, 16 des Geflügelkörpers 10 in der Förderrichtung 13 gegenüber diesem Referenzpunkt voreilen. Beispielsweise bildet das in der Zeichnung gezeigte Verbindungselement 36, mit dem jeweils eines der Aufnahmeelemente 11 mit einer - in der Zeichnung nicht gezeigten - Förderkette der Fördereinrichtung verbunden ist, einen solchen Referenzpunkt.

Die erfindungsgemäße Vorrichtung umfasst weiter eine mit der Detektionseinrichtung 35 und den Detektionsmittel 23, 24 verbundene Steuereinrichtung. Die Steuereinrichtung ist ausgebildet, jeweils ein Intervall zwischen dem Passieren des Referenzpunktes und dem Erkennen der Arbeitsposition eines der Messelemente 19, 20 zu bestimmen und auf Basis der Größe dieses Intervalls sowie der Fördergeschwindigkeit der Fördereinrichtung bzw. der Förderkette die Schultergelenkposition zu bestimmen. Vorzugsweise ist das den Referenzpunkt bildende Verbindungselement 36 mittig an dem Aufnahmeelement 11 angeordnet. Aufgrund der identischen Geometrie der Aufnahmeelemente 11 ist es so mittels der Steuereinrichtung auf einfache Weise möglich, anhand der genannten Intervallgröße unter Berücksichtigung der genannten geometrischen Zusammenhänge auf die Geometrie des Geflügelkörpers 10 und insbesondere auf die Position der Schultergelenke 15, 16 zu schließen.

Vorzugsweise ist die Steuereinrichtung ausgebildet, das genannte Intervall mittels eines an der Fördereinrichtung zur Erfassung der Förderposition angeordneten - und in der Zeichnung nicht gezeigten - Drehgebers förderstreckenbezogen zu bestimmen. Beispielsweise ist der Drehgeber als Drehimpulsgeber ausgestaltet, der entsprechend einer vorgegebenen Teilung für jede Positionsveränderung der Aufnahmeelemente 11 in Förderrichtung 13 einen entsprechenden Elektroimpuls abgibt. Anhand dieser Impulse kann die Fördergeschwindigkeit jederzeit exakt bestimmt werden. Die Impulse des Drehimpulsgebers bilden auf diese Weise einen Systemtakt, wobei die Impulsanzahl Aufschluss über die zurückgelegte Förderstrecke gibt. Wird das Intervall wie zuvor ausgeführt förderstreckenbezogen bestimmt, so ist die Steuereinrichtung ausgebildet, die zurückgelegte Wegstrecke zwischen dem Passieren des Referenzpunktes und dem Erkennen der Arbeitsposition des jeweiligen Messelements 19, 20 zu bestimmen. Die Größe des Intervalls bzw. die Anzahl der erfassten Impulse kann dann als Maß für die Schultergelenkposition ausgewertet werden. Alternativ ist es möglich, das Intervall zeitbezogen zu bestimmen, in diesem Fall ist die Steuereinrichtung beispielsweise ausgebildet, die vergehende Zeitdifferenz zwischen dem Passieren des Referenzpunktes und dem Erkennen der Arbeitsposition des jeweiligen Messelements 19, 20 zu erfassen und anhand dieser auf die Schultergelenkposition zu schließen.

Die vorliegende Erfindung umfasst auch eine Anordnung zum Filetieren von Geflügelkörpern 10. Eine solche Anordnung umfasst die zuvor beschriebene Vorrichtung zum Messen der Schultergelenkposition sowie mindestens eine in der Förderrichtung 13 nachgeordnete Filetierstation. Die Filetierstation umfasst steuerbewegliche Bearbeitungswerkzeuge, die eingerichtet sind, auf Basis der mittels der erfindungsgemäßen Vorrichtung erkannten Arbeitsposition der Messelemente 19, 20 gesteuert zu werden. Mit anderen Worten bilden die Schultergelenke 15, 16 der Geflügelkörper 10 Referenzpunkte, die für die Steuerung der weiteren Bearbeitungswerkzeuge herangezogen werden, nachdem diese mittels der erfindungsgemäßen Vorrichtung vermessen worden sind.

Vorzugsweise sind die Bearbeitungswerkzeuge der Filetierstation eingerichtet, auf Basis derjenigen erkannten Arbeitsposition der Messelemente 19, 20 gesteuert zu werden, die jeweils zuletzt zu dem Geflügelkörper 10 in mechanischen Kontakt gelangt. Dies bedeutet, dass bei anatomischen Unterschieden der rechten und linken Körperhälfte der Geflügelkörper 10 für die nachfolgende Steuerung der Bearbeitungswerkzeuge jeweils dasjenige Schultergelenk 15, 16 als Referenz herangezogen wird, das jeweils von beiden die kleinere geometrische Ausdehnung hat. Hierdurch wird sichergestellt, dass in jedem Fall die Bearbeitungswerkzeuge rechtzeitig in die erforderlichen Arbeitspositionen eingesteuert werden.

Gemäß einer vorteilhaften alternativen Ausführung sind die steuerbeweglichen Bearbeitungswerkzeuge jeweils Werkzeuge zur rechts- und linksseitigen Bearbeitung des Geflügelkörpers 10. Die jeweiligen Bearbeitungswerkzeuge werden in diesem Fall separat von den jeweiligen Messelementen 19, 20 gesteuert. Anders ausgedrückt ist es mit der erfindungsgemäßen Anordnung möglich, jede Körperseite der Geflügelkörper 10 separat zu vermessen, und für jede dieser Seiten die jeweilige Position des rechts- bzw. linksseitigen Schultergelenks 15, 16 messtechnisch zu erfassen. Entsprechend der auf diese Weise ermittelten Positionen von linksseitigen Schultergelenk 15 und rechtsseitigen Schultergelenk 16 werden die rechts- bzw. linksseitigen Bearbeitungswerkzeuge entsprechend zugeordnet jeweils separat angesteuert.

Die vorliegende Erfindung betrifft auch ein Verfahren zum Messen der Schultergelenkposition kontinuierlich geförderter Geflügelkörper 10. Zur Vermeidung von Wiederholungen wird im Folgenden nur auf ausgewählte Aspekte des erfindungsgemäßen Verfahrens eingegangen, da dieses im Wesentlichen analog zu der zuvor ausführlich beschriebenen Vorrichtung sowie der erfindungsgemäßen Anordnung ist. Wie zuvor beschrieben, werden die Geflügelkörper 10 mittels einer Fördereinrichtung entlang eines Förderweges 14 der vorgenannten Förderstrecke mittels mehrerer zur Halterung der Geflügelkörper 10 eingerichteter Aufnahmeelemente 11 gefördert. Die Förderung der Geflügelkörper 10 folgt zumindest in dem Messabschnitt 17 der Förderstrecke mit den Schultergelenken 15, 16 in der Förderrichtung 13 voraus.

Die Schultergelenke 15, 16 werden jeweils durch mechanisches in Kontaktbringen derselben mit den beiden Messelementen 19, 20 abgetastet. Diese Abtastung wird bewirkt, sobald einer der Geflügelkörper 10 die Messstation 18 mit den Messelementen 19, 20 passiert. Hierbei werden die Messelemente 19, 20 aus einer Ruheposition in eine Arbeitsposition in der Förderrichtung 13 verschwenkt. Die Positionsänderung der Messelemente 19, 20 wird, wie zuvor beschrieben, mittels Detektionsmitteln 23, 24 der Messstation 18 erkannt.

## Patentansprüche

1. Vorrichtung zum Messen der Schultergelenkposition kontinuierlich geförderter Geflügelkörper (10), umfassend
eine Förderstrecke mit einer mehrere Aufnahmeelemente (11) zur Halterung der Geflügelkörper (10) aufweisenden Fördereinrichtung, die eingerichtet ist, die Geflügelkörper (10) in eine Förderrichtung (13) entlang eines Förderwegs (14) kontinuierlich zu fördern, wobei die Fördereinrichtung ausgebildet ist, die Geflügelkörper (10) zumindest in einem Messabschnitt (17) der Förderstrecke mit den Schultergelenken (15, 16) in der Förderrichtung (13) voraus zu fördern, und
eine entlang der Förderstrecke in dem Messabschnitt (17) angeordnete Messstation (18) mit zwei Messelementen (19, 20), die eingerichtet sind beim Passieren eines der Geflügelkörper (10) jeweils mit den Schultergelenken (15, 16) des Geflügelkörpers (10) in mechanischen Kontakt zu gelangen, und wobei
die Messelemente (19, 20) jeweils um eine Schwenkachse (21, 22) derart schwenkbar angeordnet sind, dass diese sich in einer Ruheposition zumindest im Wesentlichen quer zu der Förderrichtung (13) in den Förderweg (14) hineinragend erstrecken und beim Kontakt mit den Schultergelenken (15, 16) des Geflügelkörpers (10) in einer Arbeitsposition in Förderrichtung (13) schwenkbeweglich auslenkbar eingerichtet sind, wobei die Messstation (18) Detektionsmittel (23) zur Erkennung der Arbeitspositionen der Messelemente (19, 20) aufweist,
**dadurch gekennzeichnet, dass**
die Messelemente (19, 20) mechanische Dämpfungselemente (25, 26) umfassen, die eingerichtet sind, die Messelemente (19, 20) jeweils in der Ruheposition mechanisch zu bedämpfen.

2. Vorrichtung nach Anspruch 1, **dadurch gekennzeichnet, dass** an den Messelementen (19, 20) Rückstellmittel (27, 28) angeordnet sind, die eingerichtet sind, auf die Messelemente (19, 20) ein Rückstellmoment in Richtung der Ruheposition auszuüben.

3. Vorrichtung nach einem der Ansprüche 1 oder 2, **dadurch gekennzeichnet, dass** die Detektionsmittel (23, 24) als Schaltelemente ausgebildet sind, mittels derer die Ruheposition und/oder die Arbeitsposition erfassbar sind/ist.

4. Vorrichtung nach Anspruch 3, **dadurch gekennzeichnet, dass** die Schaltelemente als induktive Näherungssensoren ausgebildet sind.

5. Vorrichtung nach einem der Ansprüche 1 bis 4, **dadurch gekennzeichnet, dass** die Dämpfungselemente (25, 26) jeweils mindestens ein Dauermagnetpaar (29, 30) mit einander zugewandten Polflächen gegensätzlicher magnetischer Polarität umfassen.

6. Vorrichtung nach Anspruch 5, **dadurch gekennzeichnet, dass** wenigstens ein Dauermagnet (31) eines der Dauermagnetpaare (29, 30) jeweils an dem Messelement (19, 20) zusammen mit diesem schwenkbeweglich angeordnet und wenigstens ein Dauermagnet (32) gegensätzlicher Polarität ortsfest angeordnet ist.

7. Vorrichtung nach einem der Ansprüche 1 bis 6, **dadurch gekennzeichnet, dass** die freien Enden (33, 34) der Messelemente (19, 20) in der Ruheposition gegenüber einer Senkrechten zu der Förderrichtung (13) um einen Vorhaltewinkel α entgegen der Förderrichtung (13) ausgerichtet angeordnet sind.

8. Vorrichtung nach einem der Ansprüche 1 bis 7, weiter umfassend eine dem Messabschnitt (17) bezüglich der Förderrichtung (13) vorgeordnete Detektionseinrichtung (35), die ausgebildet ist, das Passieren eines Referenzpunktes der Aufnahmeelemente (11) zu erfassen, wobei der Referenzpunkt der Aufnahmeelemente (11) so gewählt ist, dass die Schultergelenke (15, 16) des Geflügelkörpers (10) in der Förderrichtung (13) gegenüber dem Referenzpunkt voreilen, sowie eine mit der Detektionseinrichtung (35) und den Detektionsmitteln (23, 24) verbundene Steuereinrichtung, die ausgebildet ist, jeweils ein Intervall zwischen dem Passierens des Referenzpunktes und dem Erkennen der Arbeitspositionen der Messelemente (19, 20) zu bestimmen und auf Basis der Größe dieses Intervalls sowie der Fördergeschwindigkeit der Fördereinrichtung die Schultergelenkposition zu bestimmen.

9. Vorrichtung nach Anspruch 8 **dadurch gekennzeichnet, dass** die Steuereinrichtung ausgebildet ist, das Intervall mittels eines an der Fördereinrichtung zur Erfassung der Förderposition angeordneten Drehgebers förderstreckenbezogen oder zeitbezogen zu bestimmen.

10. Anordnung zum Filetieren von Geflügelkörpern (10), umfassend eine Vorrichtung zum Messen der Schultergelenkposition der kontinuierlich geförderten Geflügelkörper (10) nach einem der Ansprüche 1 bis 9 sowie mindestens eine in der Förderrichtung (13) nachgeordnete Filetierstation, wobei die Bearbeitungswerkzeuge der Filetierstation eingerichtet sind, auf Basis der mittels der Vorrichtung nach einem der Ansprüche 1 bis 9 erkannten Arbeitspositionen der Messelemente (19, 20) gesteuert zu werden.

11. Anordnung nach Anspruch 10, **dadurch gekennzeichnet, dass** die Bearbeitungswerkzeuge eingerichtet sind, auf Basis derjenigen erkannten Arbeitsposition der Messelemente (19, 20) gesteuert zu werden, die jeweils zuletzt mit dem Geflügelkörper (10) in mechanischen Kontakt gelangt sind.

12. Anordnung nach Anspruch 11, **dadurch gekennzeichnet, dass** die Bearbeitungswerkzeuge jeweils Werkzeuge zur rechts- und linksseitigen Bearbeitung des Geflügelkörpers (10) umfassen und eingerichtet sind, um jeweils separat von den Messelementen (19, 20) gesteuert zu werden.

13. Verfahren zum Messen der Schultergelenkposition kontinuierlich geförderter Geflügelkörper (10), umfassend
kontinuierliches Fördern der Geflügelkörper (10) entlang eines Förderweges (14) einer Förderstrecke mittels mehrerer zur Halterung der Geflügelkörper (10) eingerichteter Aufnahmeelemente (11) einer Fördereinrichtung, wobei die Geflügelkörper (10) zumindest in einem Messabschnitt (17) der Förderstrecke mit den Schultergelenken (15, 16) in der Förderrichtung (13) voraus gefördert werden, und
jeweils Abtasten der Schultergelenke (15, 16) der Geflügelkörper (10) durch mechanisches in Kontakt bringen der Schultergelenke (15, 16) mit zwei Messelementen (19, 20) einer Messstation (18) beim Passieren eines der Geflügelkörper (10), die entlang der Förderstrecke in dem Messabschnitt (17) angeordnet sind, und wobei
die Messelemente (19, 20) aus einer Ruheposition, in der sich die Messelemente (19, 20) zumindest im Wesentlichen quer zu der Förderrichtung (13) in den Förderweg hineinragend erstrecken, beim Kontakt mit den Schultergelenken (15, 16) des Geflügelkörpers (10) in eine Arbeitsposition in Förderrichtung (13) verschwenkt werden, und dass die Arbeitspositionen der Messelemente (19, 20) mittels Detektionsmittel (23, 24) der Messstation (18) erkannt werden,
**gekennzeichnet durch**
mechanisches Dämpfen der Schwenkbewegung der Messelemente (19, 20) in der Ruheposition mittels mechanischer Dämpfungselemente (25, 26).

14. Verfahren nach Anspruch 13, **gekennzeichnet durch** Ausüben eines Rückstellmoments in Richtung der Ruheposition mittels an den Messelementen (19, 20) angeordneter Rückstellmittel (27, 28).

15. Verfahren nach einem der Ansprüche 13 oder 14, **gekennzeichnet durch** Erfassen der Ruheposition und/oder der Arbeitsposition mittels der als Schaltelemente ausgebildeten Detektionsmittel (23, 24).

16. Verfahren nach Anspruch 15, **gekennzeichnet durch** berührungsloses Erfassen der Ruheposition und/oder der Arbeitsposition durch die als induktive Näherungssensoren ausgebildeten Schaltmittel.

17. Verfahren nach Anspruch 16, **dadurch gekennzeichnet, dass** die Dämpfung magnetisch erfolgt.

18. Verfahren nach einem der Ansprüche 13 bis 17, **dadurch gekennzeichnet, dass** die freien Enden (33, 34) der Messelemente (19, 20) in der Ruheposition gegenüber einer Senkrechten zu der Förderrichtung (13) um einen Vorhaltewinkel α entgegen der Förderrichtung (13) ausgerichtet sind.

19. Verfahren nach einem der Ansprüche 13 bis 18, weiter **gekennzeichnet durch**
Erfassen eines Zeitpunktes des Passierens eines Referenzpunktes der Aufnahmeelemente (11) mittels einer dem Messabschnitt (17) bezüglich der Förderrichtung (13) vorgeordneten Detektionseinrichtung (35), wobei der Referenzpunkt der Aufnahmeelemente (11) so gewählt ist, dass die Schultergelenke (15, 16) des Geflügelkörpers (10) in der Förderrichtung (13) gegenüber dem Referenzpunkt voreilen, und durch
Bestimmen jeweils eines Zeitintervalls zwischen dem Zeitpunkt des Passierens des Referenzpunktes und dem Zeitpunkt der Erkennung der Arbeitspositionen der Messelemente (19, 20) mittels der Detektionsmittel (23, 24) und durch
Bestimmen der Schultergelenkposition auf Basis der Größe des Zeitintervalls sowie der Fördergeschwindigkeit der Fördereinrichtung mittels einer Steuereinrichtung.

20. Verfahren zum Filetieren von Geflügelkörpern (10), umfassend
Bestimmen der Schultergelenkposition der kontinuierlich geförderten Geflügelkörper (10) mittels eines Verfahrens nach einem der Ansprüche 13 bis 19 sowie
Steuern von Bearbeitungswerkzeugen einer in der Förderrichtung (13) der Messstation (18) nachgeordneten mindestens einen Filetierstation auf Basis der mittels der Detektionsmittel (23, 24) erkannten Arbeitspositionen der Messelemente (19, 20).

## Claims

1. Apparatus for measuring the shoulder joint position of continuously conveyed poultry bodies (10), comprising
a conveying line having a conveying device having a plurality of receiving elements (11) for holding the poultry bodies (10), which conveying device is adapted to continuously convey the poultry bodies (10) in a conveying direction (13) along a conveying path (14), wherein the conveying device is configured to convey the poultry bodies (10), at least in a measuring section (17) of the conveying line, with the shoulder joints (15, 16) leading in the conveying direction (13), and
a measuring station (18), arranged along the conveying line in the measuring section (17), having two measuring elements (19, 20) which are adapted, as one of the poultry bodies (10) passes, to come into mechanical contact with the shoulder joints (15, 16) of the poultry body (10), and wherein
the measuring elements (19, 20) are each arranged so as to be pivotable about a pivot axis (21, 22) such that, in a rest position, they extend projecting into the conveying path (14) at least substantially transversely to the conveying direction (13) and, on contact with the shoulder joints (15, 16) of the poultry body (10) in a working position, are adapted to be pivotably movably deflectable in the conveying direction (13), wherein the measuring station (18) has detection means (23) for detecting the working positions of the measuring elements (19, 20),
**characterised in that**
the measuring elements (19, 20) comprise mechanical damping elements (25, 26) which are adapted to mechanically damp the measuring elements (19, 20) in the rest position.

2. Apparatus according to claim 1, **characterised in that** there are arranged on the measuring elements (19, 20) restoring means (27, 28) which are adapted to exert on the measuring elements (19, 20) a restoring moment in the direction towards the rest position.

3. Apparatus according to one of claims 1 or 2, **characterised in that** the detection means (23, 24) are in the form of switching elements by means of which the rest position and/or the working position are/is detectable.

4. Apparatus according to claim 3, **characterised in that** the switching elements are in the form of inductive proximity sensors.

5. Apparatus according to any one of claims 1 to 4, **characterised in that** the damping elements (25, 26) each comprise at least one pair of permanent magnets (29, 30) with mutually facing pole faces of opposite magnetic polarity.

6. Apparatus according to claim 5, **characterised in that** at least one permanent magnet (31) of one of the pairs of permanent magnets (29, 30) is arranged on the measuring element (19, 20) so as to be pivotably movable therewith, and at least one permanent magnet (32) of opposite polarity is arranged so as to be fixed.

7. Apparatus according to any one of claims 1 to 6, **characterised in that** the free ends (33, 34) of the measuring elements (19, 20) in the rest position are arranged so as to be oriented relative to a perpendicular to the conveying direction (13) by a correction angle α contrary to the conveying direction (13).

8. Apparatus according to any one of claims 1 to 7, further comprising a detection device (35) arranged upstream of the measuring section (17) with respect to the conveying direction (13), which detection device is configured to detect the passing of a reference point of the receiving elements (11), wherein the reference point of the receiving elements (11) is so chosen that the shoulder joints (15, 16) of the poultry body (10) lead in the conveying direction (13) relative to the reference point, and a control device connected to the detection device (35) and to the detection means (23, 24), which control device is configured to determine an interval between the passing of the reference point and the detection of the working positions of the measuring elements (19, 20) and to determine the shoulder joint position on the basis of the size of this interval and the conveying speed of the conveying device.

9. Apparatus according to claim 8, **characterised in that** the control device is configured to determine the interval on the basis of conveying distance or on the basis of time by means of a rotary encoder arranged on the conveying device for detecting the conveying position.

10. Arrangement for filleting poultry bodies (10), comprising an apparatus for measuring the shoulder joint position of the continuously conveyed poultry bodies (10) according to any one of claims 1 to 9 and at least one filleting station arranged downstream in the conveying direction (13), wherein the processing tools of the filleting station are adapted to be controlled on the basis of the working positions of the measuring elements (19, 20) detected by means of the apparatus according to any one of claims 1 to 9.

11. Arrangement according to claim 10, **characterised in that** the processing tools are adapted to be controlled on the basis of the detected working position of the measuring elements (19, 20) that last came into mechanical contact with the poultry body (10).

12. Arrangement according to claim 11, **characterised in that** the processing tools each comprise tools for processing the right and left side of the poultry body (10) and are adapted to be controlled separately by the measuring elements (19, 20).

13. Method for measuring the shoulder joint position of continuously conveyed poultry bodies (10), comprising
continuously conveying the poultry bodies (10) along a conveying path (14) of a conveying line by means of a plurality of receiving elements (11) of a conveying device which are adapted for holding the poultry bodies (10), wherein the poultry bodies (10), at least in a measuring section (17) of the conveying line, are conveyed with the shoulder joints (15, 16) leading in the conveying direction (13), and
scanning the shoulder joints (15, 16) of the poultry bodies (10) by bringing the shoulder joints (15, 16) into mechanical contact with two measuring elements (19, 20) of a measuring station (18) as one of the poultry bodies (10) passes, which measuring elements are arranged along the conveying line in the measuring section (17), and wherein
the measuring elements (19, 20), on contact with the shoulder joints (15, 16) of the poultry body (10), are pivoted in the conveying direction (13) out of a rest position, in which the measuring elements (19, 20) extend projecting into the conveying path at least substantially transversely to the conveying direction (13), into a working position, and in that the working positions of the measuring elements (19, 20) are detected by means of detection means (23, 24) of the measuring station (18),
**characterised by**
mechanical damping of the pivoting movement of the measuring elements (19, 20) in the rest position by means of mechanical damping elements (25, 26).

14. Method according to claim 13, **characterised by** exertion of a restoring moment in the direction towards the rest position by means of restoring means (27, 28) arranged on the measuring elements (19, 20).

15. Method according to either claim 13 or claim 14, **characterised by** detection of the rest position and/or of the working position by means of the detection means (23, 24) in the form of switching elements.

16. Method according to claim 15, **characterised by** contactless detection of the rest position and/or of the working position by the switching means in the form of inductive proximity sensors.

17. Method according to claim 16, **characterised in that** damping takes place magnetically.

18. Method according to any one of claims 13 to 17, **characterised in that** the free ends (33, 34) of the measuring elements (19, 20) in the rest position are oriented relative to a perpendicular to the conveying direction (13) by a correction angle α contrary to the conveying direction (13).

19. Method according to any one of claims 13 to 18, further **characterised by**
detection of a time of passing of a reference point of the receiving elements (11) by means of a detection device (35) arranged upstream of the measuring section (17) with respect to the conveying direction (13), wherein the reference point of the receiving elements (11) is so chosen that the shoulder joints (15, 16) of the poultry body (10) lead in the conveying direction (13) relative to the reference point, and by determination of a time interval between the time of passing of the reference point and the time of detection of the working positions of the measuring elements (19, 20) by means of the detection means (23, 24), and by
determination of the shoulder joint position by means of a control device on the basis of the size of the time interval and the conveying speed of the conveying device.

20. Method for filleting poultry bodies (10), comprising
determining the shoulder joint position of the continuously conveyed poultry bodies (10) by means of a method according to any one of claims 13 to 19, and
controlling processing tools of an at least one filleting station arranged downstream of the measuring station (18) in the conveying direction (13) on the basis of the working positions of the measuring elements (19, 20) detected by means of the detection means (23, 24).

## Revendications

1. Dispositif pour mesurer la position de l'articulation d'épaule de corps de volaille (10) transportés en continu, comprenant
une voie de transport avec un appareil de transport présentant plusieurs éléments de réception (11) pour le maintien des corps de volaille (10), qui est adapté pour transporter en continu les corps de volaille (10) dans une direction de transport (13) le long d'un trajet de transport (14), l'appareil de transport étant configuré pour transporter les corps de volaille (10) au moins dans une section de mesure (17) de la voie de transport avec les articulations d'épaule (15, 16) en avant dans la direction de transport (13), et
une station de mesure (18) agencée le long de la voie de transport dans la section de mesure (17) avec deux éléments de mesure (19, 20) qui sont adaptés pour entrer en contact mécanique avec les articulations d'épaule (15, 16) du corps de volaille (10) lors du passage de l'un des corps de volaille (10), et dans lequel
les éléments de mesure (19, 20) sont agencés de manière à pouvoir pivoter respectivement autour d'un axe de pivotement (21, 22) de telle sorte que, dans une position de repos, ceux-ci s'étendent au moins essentiellement transversalement à la direction de transport (13) en pénétrant dans le trajet de transport (14), et sont adaptés pour pouvoir être déviés par pivotement dans une position de travail dans la direction de transport (13) lors du contact avec les articulations d'épaule (15, 16) du corps de volaille (10), la station de mesure (18) présentant des moyens de détection (23) pour détecter les positions de travail des éléments de mesure (19, 20),
**caractérisé en ce que**
les éléments de mesure (19, 20) comprennent des éléments d'amortissement mécanique (25, 26) qui sont adaptés pour amortir mécaniquement les éléments de mesure (19, 20) respectivement dans la position de repos.

2. Dispositif selon la revendication 1, **caractérisé en ce que** des moyens de rappel (27, 28) sont agencés sur les éléments de mesure (19, 20), qui sont adaptés pour appliquer sur les éléments de mesure (19, 20) un couple de rappel en direction de la position de repos.

3. Dispositif selon l'une quelconque des revendications 1 ou 2, **caractérisé en ce que** les moyens de détection (23, 24) sont configurés sous forme d'éléments de commutation au moyen desquels la position de repos et/ou la position de travail peuvent être détectées.

4. Dispositif selon la revendication 3, **caractérisé en ce que** les éléments de commutation sont configurés sous forme de capteurs de proximité inductifs.

5. Dispositif selon l'une quelconque des revendications 1 à 4, **caractérisé en ce que** les éléments d'amortissement (25, 26) comprennent chacun au moins une paire d'aimants permanents (29, 30) ayant des surfaces polaires tournées l'une vers l'autre de polarités magnétiques opposées.

6. Dispositif selon la revendication 5, **caractérisé en ce qu'**au moins un aimant permanent (31) de l'une des paires d'aimants permanents (29, 30) est agencé en pivotement sur l'élément de mesure (19, 20) conjointement avec celui-ci, et au moins un aimant permanent (32) de polarité opposée est agencé de manière fixe.

7. Dispositif selon l'une quelconque des revendications 1 à 6, **caractérisé en ce que** les extrémités libres (33, 34) des éléments de mesure (19, 20) sont agencées, dans la position de repos, orientées selon un angle d'inclinaison α à l'encontre de la direction de transport (13) par rapport à une perpendiculaire à la direction de transport (13).

8. Dispositif selon l'une quelconque des revendications 1 à 7, comprenant en outre un appareil de détection (35) placé en amont de la section de mesure (17) par rapport à la direction de transport (13), qui est configuré pour détecter le passage d'un point de référence des éléments de réception (11), le point de référence des éléments de réception (11) étant choisi de telle sorte que les articulations d'épaule (15, 16) du corps de volaille (10) sont en avance par rapport au point de référence dans la direction de transport (13), ainsi qu'un appareil de commande relié à l'appareil de détection (35) et aux moyens de détection (23, 24), qui est configuré pour déterminer respectivement un intervalle entre le passage du point de référence et la détection des positions de travail des éléments de mesure (19, 20) et pour déterminer la position de l'articulation d'épaule sur la base de la taille de cet intervalle ainsi que de la vitesse de transport de l'appareil de transport.

9. Dispositif selon la revendication 8, **caractérisé en ce que** l'appareil de commande est configuré pour déterminer l'intervalle en fonction de la voie de transport ou en fonction du temps au moyen d'un capteur de rotation agencé sur l'appareil de transport pour détecter la position de transport.

10. Agencement de découpe de filets de corps de volaille (10), comprenant un dispositif de mesure de la position de l'articulation d'épaule des corps de volaille (10) transportés en continu selon l'une quelconque des revendications 1 à 9, ainsi qu'au moins une station de découpe de filets placée en aval dans la direction de transport (13), les outils de traitement de la station de découpe de filets étant adaptés pour être commandés sur la base des positions de travail des éléments de mesure (19, 20) détectées au moyen du dispositif selon l'une quelconque des revendications 1 à 9.

11. Agencement selon la revendication 10, **caractérisé en ce que** les outils de traitement sont adaptés pour être commandés sur la base de la position de travail détectée des éléments de mesure (19, 20) qui sont respectivement entrés en contact mécanique en dernier avec le corps de volaille (10).

12. Agencement selon la revendication 11, **caractérisé en ce que** les outils de traitement comprennent respectivement des outils pour le traitement du côté droit et du côté gauche du corps de volaille (10) et sont adaptés pour être commandés séparément par les éléments de mesure (19, 20).

13. Procédé pour mesurer la position de l'articulation d'épaule de corps de volaille (10) transportés en continu, comprenant
le transport continu des corps de volaille (10) le long d'un trajet de transport (14) d'une voie de transport au moyen de plusieurs éléments de réception (11) d'un appareil de transport adaptés pour le maintien des corps de volaille (10), les corps de volaille (10) étant transportés au moins dans une section de mesure (17) de la voie de transport avec les articulations d'épaule (15, 16) en avant dans la direction de transport (13), et
le palpage respectif des articulations d'épaule (15, 16) des corps de volaille (10) par mise en contact mécanique des articulations d'épaule (15, 16) avec deux éléments de mesure (19, 20) d'une station de mesure (18) lors du passage de l'un des corps de volaille (10) qui sont agencés le long de la voie de transport dans la section de mesure (17), et dans lequel
les éléments de mesure (19, 20) sont pivotés d'une position de repos, dans laquelle les éléments de mesure (19, 20) s'étendent au moins essentiellement transversalement à la direction de transport (13) en pénétrant dans le trajet de transport, vers une position de travail dans la direction de transport (13) lors du contact avec les articulations d'épaule (15, 16) du corps de volaille (10), et les positions de travail des éléments de mesure (19, 20) sont détectées au moyen de moyens de détection (23, 24) de la station de mesure (18),
**caractérisé par**
l'amortissement mécanique du mouvement de pivotement des éléments de mesure (19, 20) dans la position de repos au moyen d'éléments d'amortissement mécanique (25, 26).

14. Procédé selon la revendication 13, **caractérisé par** l'application d'un couple de rappel en direction de la position de repos au moyen de moyens de rappel (27, 28) agencés sur les éléments de mesure (19, 20).

15. Procédé selon l'une quelconque des revendications 13 ou 14, **caractérisé par** la détection de la position de repos et/ou de la position de travail au moyen des moyens de détection (23, 24) configurés sous la forme d'éléments de commutation.

16. Procédé selon la revendication 15, **caractérisé par** la détection sans contact de la position de repos et/ou de la position de travail par les moyens de commutation configurés sous forme de capteurs de proximité inductifs.

17. Procédé selon la revendication 16, **caractérisé en ce que** l'amortissement est effectué magnétiquement.

18. Procédé selon l'une quelconque des revendications 13 à 17, **caractérisé en ce que** les extrémités libres (33, 34) des éléments de mesure (19, 20) sont orientées, dans la position de repos, selon un angle d'inclinaison α à l'encontre de la direction de transport (13) par rapport à une perpendiculaire à la direction de transport (13).

19. Procédé selon l'une quelconque des revendications 13 à 18, **caractérisé en outre par**
la détection d'un temps de passage d'un point de référence des éléments de réception (11) au moyen d'un appareil de détection (35) placé en amont de la section de mesure (17) par rapport à la direction de transport (13), le point de référence des éléments de réception (11) étant choisi de telle sorte que les articulations d'épaule (15, 16) du corps de volaille (10) sont en avance dans la direction de transport (13) par rapport au point de référence, et par
la détermination respectivement d'un intervalle de temps entre le temps du passage du point de référence et le temps de la détection des positions de travail des éléments de mesure (19, 20) au moyen des moyens de détection (23, 24), et par
la détermination de la position de l'articulation d'épaule sur la base de la taille de l'intervalle de temps ainsi que de la vitesse de transport de l'appareil de transport au moyen d'un appareil de commande.

20. Procédé de découpe de filets de corps de volaille (10), comprenant
la détermination de la position de l'articulation d'épaule des corps de volaille (10) transportés en continu au moyen d'un procédé selon l'une quelconque des revendications 13 à 19, ainsi que
la commande d'outils de traitement d'au moins une station de découpe de filets placée en aval de la station de mesure (18) dans la direction de transport (13) sur la base des positions de travail des éléments de mesure (19, 20) détectées au moyen des moyens de détection (23, 24).
